# FASCICULE DE BREVET EUROPEEN

(11) **EP 4 246 755 B1**
(45) Date de publication et mention de la délivrance du brevet: **23.09.2026**
(21) Numéro de dépôt: 23162174.9
(22) Date de dépôt: 15.03.2023
(51) Int. Cl.: H02J 3/32, H02J 3/38, H02J 3/48

(54) **PILOTAGE COORDONNÉ D'UN AGRÉGAT POUR FOURNIR UN RÉGLAGE PRIMAIRE DE FRÉQUENCE**
KOORDINIERTE STEUERUNG EINES AGGREGATS ZUR BEREITSTELLUNG EINER PRIMÄREN FREQUENZEINSTELLUNG
COORDINATED CONTROL OF AN AGGREGATE TO PROVIDE PRIMARY FREQUENCY ADJUSTMENT

(30) Priorité: 16.03.2022 FR 2202322
(43) Date de publication de la demande: 20.09.2023
(73) Titulaire: Electricité de France, 75008 Paris (FR)
(72) Inventeur: ROSSE, Antoine, 75014 PARIS (FR)
(74) Mandataire: Plasseraud IP

(56) Documents cités:
- BIGNUCOLO FABIO ET AL: "Integration of Lithium-Ion Battery Storage Systems in Hydroelectric Plants for Supplying Primary Control Reserve", ENERGIES, vol. 10, no. 1, 14 January 2017 (2017-01-14), pages 98, XP055973379, DOI: 10.3390/en10010098
- MAKINEN TOMI ET AL: "Modelling and benefits of combined operation of hydropower unit and battery energy storage system on grid primary frequency control", 2020 IEEE INTERNATIONAL CONFERENCE ON ENVIRONMENT AND ELECTRICAL ENGINEERING AND 2020 IEEE INDUSTRIAL AND COMMERCIAL POWER SYSTEMS EUROPE (EEEIC / I&CPS EUROPE), IEEE, 9 June 2020 (2020-06-09), pages 1 - 6, XP033801722, DOI: 10.1109/EEEIC/ICPSEUROPE49358.2020.9160666

## Description

### Domaine technique

La présente invention relève du domaine des centrales de production hydroélectriques, en particulier de type « fil de l'eau », et des systèmes de stockage par batteries interfacées par des convertisseurs d'électronique de puissance (onduleurs), connectées sur un même réseau électrique synchrone.

Les agrégations de sources décentralisées, aussi appelées « centrales virtuelles » ou « VPP » (« Virtual Power Plant », en anglais), participent au réglage primaire de fréquence du réseau.

La présente invention porte plus particulièrement sur un procédé de commande d'une telle centrale virtuelle, ainsi que sur un contrôleur centralisé mettant en œuvre un tel procédé et sur un programme informatique prévu pour être exécuté par un tel contrôleur centralisé.

Ce procédé de commande permet de piloter de manière coordonnée une batterie et un ensemble de centrales hydroélectriques ayant des caractéristiques dynamiques différentes, pour fournir un service de réglage primaire de fréquence agrégé. Ce service peut en particulier s'intégrer au service « FCR » (« Frequency Containment Reserve », en anglais), qui est le service de réglage primaire de fréquence du système électrique européen.

### Technique antérieure

Aujourd'hui, de plus en plus de nouvelles technologies, telles que les systèmes de stockage par batteries, sont installées dans les réseaux électriques pour rendre des services au réseau, tels que le réglage primaire de fréquence. Le réglage de fréquence est historiquement assuré par les moyens de production conventionnels (hydraulique, thermique, nucléaire, ...), et ceci a un coût pour le producteur, car pour assurer la réserve associée au réglage de fréquence, les groupes doivent être opérés en-dessous de leur puissance nominale.

L'utilisation de batteries pour fournir ce service de réglage de fréquence peut permettre d'optimiser le parc de production conventionnel. En effet, si toute la réserve est assurée par des batteries, cela libère une contrainte sur les groupes conventionnels, qui peuvent alors être opérés à leur puissance nominale.

De nombreux projets de réglage de fréquence par batteries ont déjà été construits en France et dans le reste du monde.

La technique générale de pilotage d'une batterie seule participant au réglage primaire de fréquence (FCR), dans la littérature aujourd'hui, peut être résumée de la façon suivante : P_{ref_bat} = P_{FCR} + P₀.

Le terme P_{ref_bat} désigne la consigne de puissance active de la batterie, le terme P_{FCR} désigne la consigne de puissance liée au service de réglage de fréquence et le terme P₀ désigne la consigne de puissance liée à la gestion de charge de la batterie.

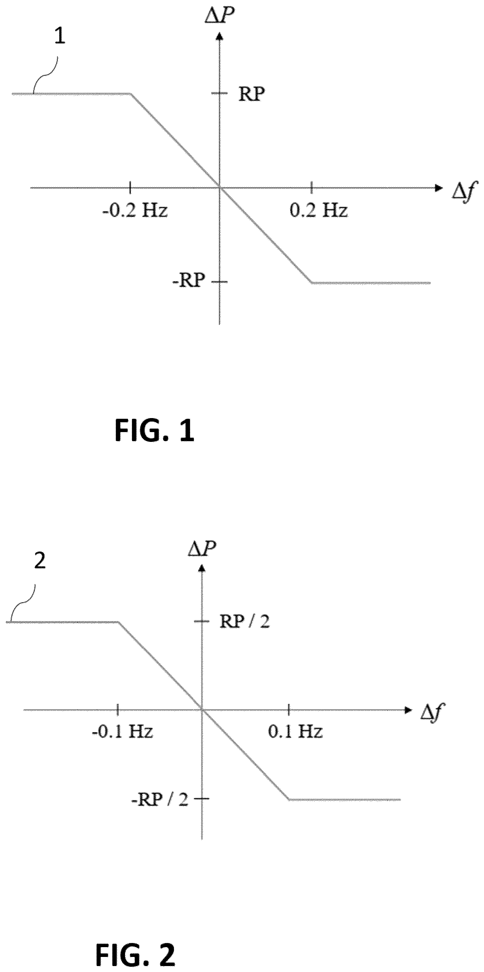

Le terme P_{FCR} est calculé typiquement par une loi statique notée P(f) dans le cas d'une réserve primaire de fréquence libérée sur un écart de fréquence de 200 mHz. Cette loi statique peut être décrite par l'équation P(f) = P_{FCR} = - K (f - f₀). Le terme K est une constante qui représente une énergie réglante, le terme f désigne la fréquence du réseau électrique à un instant courant, et le terme f₀ désigne la fréquence nominale du réseau électrique (50 Hz en Europe). Le terme P_{FCR} est saturé afin de limiter la valeur absolue de la consigne de puissance liée au service de réglage de fréquence à un seuil noté RP. La figure 1 illustre un exemple de loi statique P(f) sous une forme graphique (1), en tant qu'une variation de puissance ΔP = P_{FCR} exprimée en fonction d'une variation de fréquence Δf = f - f₀. Dans cet exemple le terme P_{FCR} ne varie que dans un intervalle de fréquence limité centré sur f₀, plus exactement dans l'intervalle de fréquence [f₀ - 0,2 Hz ; f₀ + 0,2 Hz].

Lorsque plusieurs moyens de production sont assemblés pour fournir un service de réglage de fréquence agrégé, il est possible de réaliser le pilotage de manière décentralisée. Dans cette situation, chaque moyen de production est doté de son propre régulateur lui permettant d'ajuster automatiquement sa puissance en fonction de la fréquence qu'il mesure, suivant une loi statique P(f) telle que celle décrite au paragraphe précédent. La réponse en puissance de l'agrégat est alors la somme des réponses en puissance de chaque moyen de production.

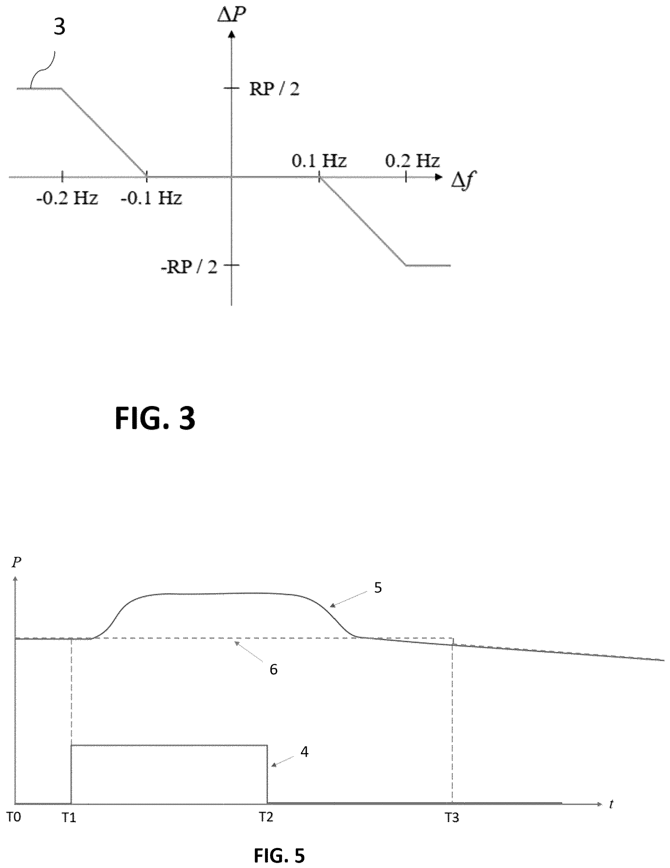

Avec un pilotage décentralisé, il est également possible définir une loi P(f) différente pour chaque moyen de production. Par exemple, dans un agrégat de deux moyens de production, on peut définir pour chaque moyen de production une loi respective, telles qu'illustrées respectivement aux figures 2 et 3.

La figure 2 représente une loi statique P(f) (2) applicable à un moyen de production donné, prévoyant :
une variation linéaire du terme P_{FCR} de RP/2 à -RP/2 lorsque la fréquence du réseau électrique varie de f₀ - 0,1 Hz à f₀ + 0,1 Hz,
le terme P_{FCR} étant par ailleurs saturé à RP/2 ou à -RP/2, lorsque la fréquence est respectivement inférieure à f₀ - 0,1 Hz ou supérieure à f₀ + 0,1 Hz.

La figure 3 représente une autre loi statique P(f) (3) applicable à un autre moyen de production donné, prévoyant :
une première variation linéaire du terme P_{FCR} de RP/2 à une valeur nulle lorsque la fréquence du réseau électrique varie de f₀ - 0,2 Hz à f₀ - 0,1 Hz, et
une seconde variation linéaire du terme P_{FCR} d'une valeur nulle à -RP/2 lorsque la fréquence du réseau électrique varie de f₀ + 0,1 Hz à f₀ + 0,2 Hz,
le terme P_{FCR} étant par ailleurs nul lorsque la fréquence du réseau électrique est comprise entre f₀ - 0,1 Hz à f₀ + 0,1 Hz,
le terme P_{FCR} étant par ailleurs saturé à RP/2 ou à -RP/2, lorsque la fréquence est respectivement inférieure à f₀ - 0,2 Hz ou supérieure à f₀ + 0,2 Hz.

Le moyen de production ayant la loi P(f) (2) telle qu'illustrée par la figure 2 sera beaucoup plus sollicité que celui ayant la loi P(f) (3) telle qu'illustrée par la figure 3, car ce dernier ne sera sollicité que sur des déviations de fréquence supérieures à 100 mHz. Mais la somme des deux réponses sera équivalente à celle d'un moyen de production unique ayant la loi de réglage P(f) (1) telle qu'illustrée par la figure 1. Avec un pilotage décentralisé, chaque moyen de production est autonome pour réaliser sa réponse en puissance face aux variations de fréquence.

Une autre technique de pilotage, dite « centralisée », consiste à utiliser un contrôleur centralisé qui, à partir d'une mesure de fréquence f du réseau et d'un gain de réglage noté K, calcule une consigne de réserve globale P_{FCR} = - K (f - f₀) et répartit cette réserve sur l'ensemble des moyens de production de l'agrégat, par exemple en décomposant la consigne de réserve globale au prorata de la puissance nominale de chaque moyen de production, tel que la somme des consignes soit égale à la consigne de réserve globale.

Avec cette technique de pilotage centralisée, d'autres critères peuvent être utilisés pour ajuster de manière dynamique la puissance de réserve fournie par chaque moyen de production. Il est donc possible d'avoir plus de flexibilité sur la répartition de la réserve, de manière dynamique, par rapport à un pilotage décentralisé qui fixe les contributions de chaque moyen de production par les lois P(f).

En revanche, un pilotage centralisé implique également des contraintes techniques. Pour qu'il fonctionne, il est nécessaire d'avoir des liens de communication solides entre le contrôleur centralisé et les moyens de production, pour que les consignes de puissance puissent être calculées dynamiquement, c'est-à-dire à chaque changement de la fréquence, cette dernière variant en permanence, et pour que ces consignes de puissance soient prises en compte rapidement par les moyens de production pour adapter la puissance de l'agrégat en fonction des variations de fréquence.

En particulier, si les délais de communication sont trop importants, il est possible que la réponse de l'agrégat soit trop lente par rapport aux exigences de conformité imposées par les Gestionnaires de Réseau de Transport (GRT).

La publication XP055973379, BIGNUCOLO FABIO ET AL: "Integration of Lithiumion Battery Storage Systems in Hydroelectric Plants for Supplying Primary Control Reserve", ENERGIES, vol. 10, no. 1, 14 janvier 2017 (2017-01-14), page 98, divulgue un procédé de pilotage selon l'art antérieur.

Il ressort que les procédés de pilotage connus d'agrégats, centralisé comme décentralisé, ont chacun leurs avantages et leurs limites.

Il existe donc un besoin pour un procédé de pilotage dépassant les limites respectives des procédés de pilotage centralisé et décentralisé.

### Résumé

La présente divulgation vient améliorer la situation.

Il est proposé un procédé de commande, mis en œuvre par un contrôleur centralisé, d'une centrale électrique virtuelle raccordée au réseau électrique, la centrale électrique virtuelle comprenant au moins une batterie et un ensemble de centrales hydroélectriques, la batterie étant commandée par un contrôleur local configuré pour effectuer un réglage primaire de fréquence du réseau électrique, chaque centrale hydroélectrique étant commandée par un contrôleur local correspondant,
le procédé comprenant :
obtenir, par au moins une mesure, une puissance totale, notée P_{tot_hydro}, produite par l'ensemble de centrales hydroélectriques à un instant donné,
obtenir une mesure d'une fréquence, notée f, du réseau électrique à l'instant donné,
fournir, au contrôleur local de la batterie, une consigne d'ajustement de puissance de la batterie, notée P_{0_bat}, calculée sur la base de ladite puissance totale, ladite consigne d'ajustement de puissance de la batterie étant destinée à modifier la commande de la batterie par le contrôleur local de manière à compenser une variation de ladite puissance totale par rapport à une puissance de consigne globale de l'ensemble de centrales hydroélectriques, et
fournir, à au moins un contrôleur local d'une centrale hydroélectrique, au moins une consigne d'ajustement de puissance de ladite centrale hydroélectrique, notée P_{flex_i}, calculée sur la base de ladite mesure de fréquence, la consigne d'ajustement de puissance de ladite centrale hydroélectrique étant destinée à provoquer une variation d'une puissance produite par ladite centrale hydroélectrique conformément à un critère d'activation destiné à répartir une charge du réglage de fréquence entre la batterie et les centrales hydroélectriques en fonction de ladite mesure de fréquence.

Le procédé de commande proposé permet d'offrir un service de réglage primaire de fréquence en combinant une réserve primaire de fréquence offerte par une ou plusieurs batteries avec une réserve primaire de fréquence supplémentaire offerte par une ou plusieurs centrales hydroélectriques. Le dimensionnement de la ou des batteries peut ainsi être optimisé.

Le recours à ces réserves primaires de fréquence combinées est coordonné et obéit à une stratégie de pilotage hybride qui cumule les avantages des stratégies de pilotage centralisée et décentralisée. Des contrôleurs locaux sont chargés du pilotage des moyens de production. Ils peuvent recevoir des consignes d'ajustement de puissance émises par le contrôleur centralisé et modifier leur consigne globale en fonction de ces consignes d'ajustement.

II est également proposé un système comprenant une centrale électrique virtuelle raccordée au réseau électrique et un contrôleur centralisé configuré pour commander une centrale électrique virtuelle raccordée au réseau électrique, la centrale électrique virtuelle comprenant au moins une batterie et un ensemble de centrales hydroélectriques, la batterie étant commandée par un contrôleur local configuré pour effectuer un réglage primaire de fréquence du réseau électrique, chaque centrale hydroélectrique étant commandée par un contrôleur local correspondant, commander la centrale électrique virtuelle comprenant :
obtenir, par au moins une mesure, une puissance totale, notée P_{tot_hydro}, produite par l'ensemble de centrales hydroélectriques à un instant donné,
obtenir une mesure d'une fréquence, notée f, du réseau électrique à l'instant donné,
fournir, au contrôleur local de la batterie, une consigne de puissance de la batterie, notée P_{0_bat}, calculée sur la base de ladite puissance totale, ladite consigne de puissance étant destinée à modifier la commande de la batterie par le contrôleur local de manière à compenser une variation de ladite puissance totale par rapport à une puissance de consigne globale de l'ensemble de centrales hydroélectriques, et
fournir, à au moins un contrôleur local d'une centrale hydroélectrique, au moins une consigne d'ajustement de puissance, notée P_{flex_i}, calculée sur la base de ladite mesure de fréquence, ladite consigne d'ajustement de puissance étant destinée à provoquer une variation d'une puissance produite par ladite centrale hydroélectrique conformément à une stratégie de gestion de la batterie.

Il est également proposé un programme informatique comportant des instructions pour la mise en œuvre du procédé proposé lorsque ce programme est exécuté par un contrôleur centralisé.

Le procédé proposé et le contrôleur centralisé proposé peuvent comprendre optionnellement certaines fonctions supplémentaires telles que définies ci-dessous.

Il peut être prévu d'obtenir, au niveau du contrôleur centralisé, une valeur d'énergie réglante de la centrale électrique virtuelle, notée K, calculée sur la base d'une estimation d'une quantité de réserve primaire de fréquence disponible de la centrale électrique virtuelle, c'est-à-dire sur la base d'un point de fonctionnement et d'une marge de puissance à la hausse et à la baisse des centrales hydroélectriques et de la batterie. K est un gain statique, qui ne dépend pas des variations dynamiques de puissance ou de fréquence.

L'énergie réglante primaire d'un agrégat déclaré en réglage primaire de fréquence représente la quantité de puissance qu'il peut fournir au réseau électrique pour une variation de fréquence donnée tant que sa réserve n'est pas entièrement consommée. Cette énergie réglante est une grandeur utilisable par le contrôleur local de la batterie pour déterminer une consigne liée au service de réglage primaire de fréquence du réseau électrique.

Une consigne d'ajustement de puissance donnée, fournie au contrôleur local d'une centrale hydroélectrique donnée, peut être calculée au moyen d'une formule de calcul sélectionnée en fonction d'au moins un critère prédéfini relatif à la mesure de fréquence. Un tel critère prédéfini peut être par exemple un résultat d'une comparaison entre, d'une part, un écart entre la mesure de fréquence et une valeur nominale de fréquence, et d'autre part un seuil prédéfini.

Ainsi, par exemple, la consigne d'ajustement de puissance d'une centrale hydroélectrique peut prendre une valeur non nulle et calculée selon une formule de calcul prédéfinie lorsque la mesure de fréquence s'écarte significativement de la fréquence nominale. Dans le cas contraire, la consigne d'ajustement de puissance peut ne pas être calculée et/ou être maintenue nulle. Selon cet exemple, la réserve primaire de fréquence de la centrale hydroélectrique est sollicitée uniquement en cas d'excursion en dehors d'un domaine de fréquence restreint autour de la fréquence nominale.

Il peut être prévu en outre, au niveau du contrôleur centralisé, d'obtenir, du contrôleur local de chaque centrale hydroélectrique, une mesure de puissance individualisée produite par ladite centrale hydroélectrique à l'instant donné, et de calculer la puissance totale produite par l'ensemble de centrales hydroélectriques à l'instant donné comme étant la somme desdites mesures de puissance individualisées à l'instant donné.

Le contrôleur centralisé agit alors comme un collecteur centralisé de mesures de puissance normalement issues des contrôleurs locaux des centrales hydroélectriques. Ainsi, la puissance totale de la centrale électrique virtuelle peut être calculée par le contrôleur centralisé s'appuyant uniquement sur des équipements existants au niveau des centrales hydroélectriques.

La consigne d'ajustement de puissance fournie au contrôleur local d'une centrale hydroélectrique peut être calculée par rapport à une puissance de base de ladite centrale hydroélectrique, ladite puissance de base étant calculée sur la base d'un critère fonction d'un historique de mesures horodatées de puissance individualisée produite par ladite centrale hydroélectrique et d'un historique de consignes d'ajustement de puissance précédemment fournies au contrôleur local de ladite centrale hydroélectrique.

Ainsi, il est par exemple possible d'estimer, pour une centrale hydroélectrique donnée et par extrapolation de mesures de puissance passées, la part imputable à la prise en compte de consignes d'ajustement de puissance, et de déduire cette part des mesures de puissance courantes.

Optionnellement, chaque centrale hydroélectrique de la centrale électrique virtuelle disposant d'une réserve primaire de fréquence propre, la consigne d'ajustement de puissance fournie au contrôleur local d'une centrale hydroélectrique donnée peut être calculée en fonction d'un ordre de priorité prédéfini relatif à un recours à chacune desdites réserves primaires de fréquence.

Ainsi, il peut être choisi de faire appel aux réserves primaires de fréquence de certaines centrales hydroélectriques en priorité, et à celles d'autres centrales hydroélectriques seulement en dernier recours. L'ordre de priorité peut être fixé en fonction de tout critère approprié, en particulier relatif au temps de réponse du service de réglage primaire de fréquence et/ou à l'évolution temporelle de la disponibilité de la réserve primaire de fréquence au niveau de chaque centrale hydroélectrique.

Il peut être prévu en outre, au niveau du contrôleur centralisé, d'obtenir une mesure d'un état de charge de la batterie, et la consigne de puissance de la batterie peut être en outre calculée sur la base de ladite mesure de l'état de charge de manière à favoriser un maintien, ou un retour, de l'état de la charge de la batterie au sein d'un domaine prédéfini.

Ainsi, le pilotage coordonné de la batterie et des centrales hydroélectriques peut permettre de minimiser l'amplitude des sollicitations d'une batterie au cœur d'un service de réglage primaire de fréquence. Plus précisément, la fenêtre de cyclage peut être réduite par le biais d'un recours aux réserves primaires de fréquence des centrales hydroélectriques. Par exemple, il peut être prévu d'activer à la baisse la réserve primaire de fréquence d'une centrale hydroélectrique (c'est-à-dire baisser la puissance émise par cette centrale hydroélectrique) pour favoriser la décharge de la batterie à chaque fois que son état de charge s'approche d'un seuil haut prédéterminé.

### Brève description des dessins

D'autres caractéristiques, détails et avantages apparaîtront à la lecture de la description détaillée ci-après, et à l'analyse des dessins annexés, sur lesquels :
**Fig. 1**
   [Fig. 1] illustre une loi statique convenant pour configurer un régulateur de puissance d'un moyen de production de manière à entraîner la libération d'une réserve primaire de fréquence par le moyen de production sur un écart de fréquence de 200 mHz, dans un exemple de réalisation.
**Fig. 2**
**Fig. 3**
   [Fig. 2] et [Fig. 3] illustrent chacune une loi statique, chacune convenant pour configurer respectivement un régulateur de puissance d'un moyen de production respectif, de manière à entraîner conjointement la libération d'une réserve primaire de fréquence par ces moyens de production sur un écart de fréquence de 200 mHz, dans un exemple de réalisation.
**Fig. 4**

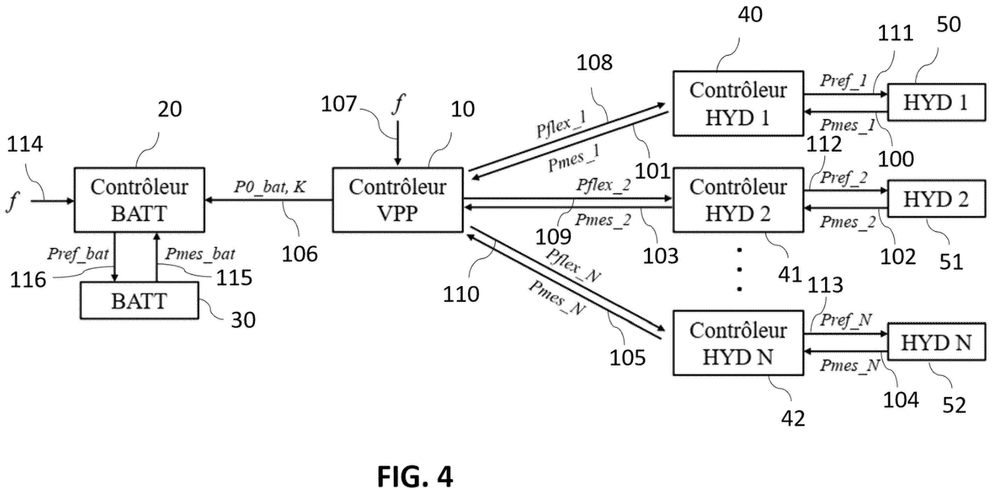

   [Fig. 4] illustre une architecture d'une stratégie de pilotage d'une centrale électrique virtuelle dans un exemple de réalisation.
**Fig. 5**
   [Fig. 5] illustre, dans un exemple de réalisation, une évolution temporelle : d'une consigne d'ajustement de puissance transmise à un contrôleur local d'une centrale hydroélectrique,
   d'une puissance émise par ladite centrale hydroélectrique et d'une puissance de base estimée de ladite centrale hydroélectrique.
**Fig. 6**

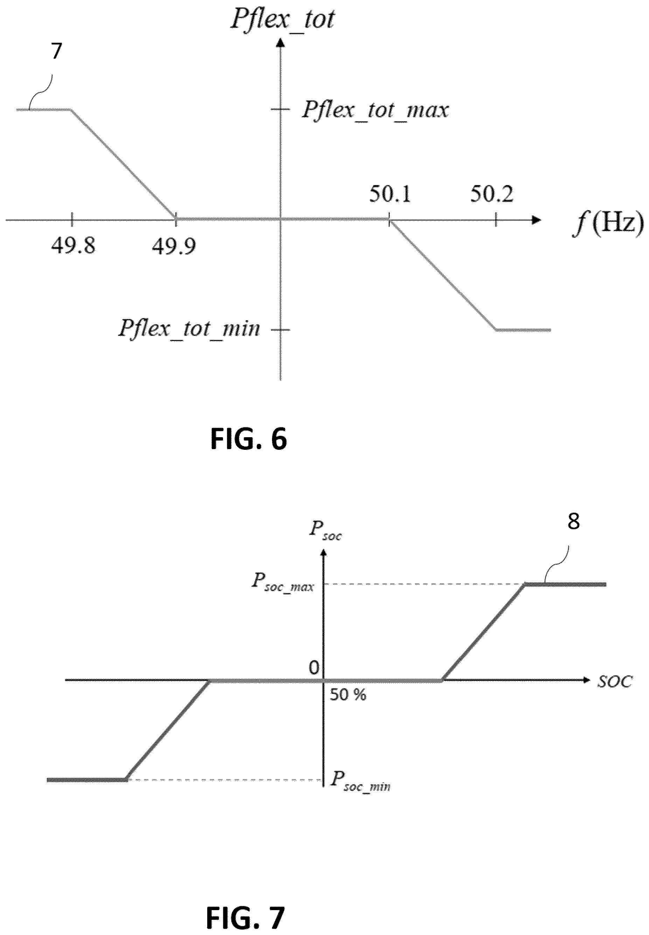

   [Fig. 6] illustre une loi statique convenant pour définir une consigne d'ajustement de puissance permettant de configurer un régulateur de puissance d'une centrale hydroélectrique de manière à entraîner la libération d'une réserve primaire de fréquence par la centrale hydroélectrique sur un écart de fréquence de 200 mHz, dans un exemple de réalisation.
**Fig. 7**
   [Fig. 7] illustre une loi statique convenant pour définir une consigne d'ajustement de puissance, ou « offset » en anglais, applicable à une batterie conformément à une stratégie de gestion de charge de la batterie, la batterie et la centrale hydroélectrique étant agrégées en une centrale électrique virtuelle et pilotées de manière coordonnée pour fournir un service de réglage primaire de fréquence, dans un exemple de réalisation.

### Description des modes de réalisation

Les dessins et la description pourront non seulement servir à mieux faire comprendre la présente divulgation, mais aussi contribuer à sa définition, le cas échéant.

Le principe général de la présente divulgation repose sur l'agrégation d'une ou plusieurs batteries avec une ou plusieurs centrales hydroélectriques, par exemple de type « fil de l'eau ». Il est proposé d'exploiter les capacités de flexibilité en puissance active de cette ou ces centrales hydroélectriques pour fournir, au besoin, de la réserve primaire de fréquence complémentaire à celle de la ou des batteries. Cette agrégation peut permettre d'optimiser à la fois le dimensionnement de la ou des batteries et l'utilisation de la ou des centrales hydroélectriques, sur le plan technico-économique. Sur les centrales hydroélectriques, une simple adaptation des automates existants est nécessaire. Cette adaptation est de permettre de prendre en compte une consigne additionnelle pour monter ou baisser la puissance active. Cette consigne s'additionne alors à celle déjà calculée par les équipements existants qui réalisent la régulation de débit et/ou de niveau.

Le procédé de commande de l'agrégat est ingénieux en ce que l'ensemble des moyens de production de l'agrégat, c'est-à-dire la ou les batteries et la ou les centrales hydroélectriques, sont pilotés de manière coordonnée pour fournir un service de réglage primaire de fréquence. Une caractéristique importante de ce procédé de commande est le caractère hybride du pilotage de la ou des batteries de l'agrégat, ce qui permet de profiter des avantages des stratégies de contrôle décentralisées et centralisées.

En régime normal où la fréquence du réseau électrique synchrone est proche de la valeur de référence, soit 50 Hz en France, les centrales hydroélectriques peuvent être placées à leur point de fonctionnement optimal, qui dépend notamment du débit hydraulique entrant, pendant qu'une ou plusieurs batteries assurent la totalité du réglage de fréquence, en se déchargeant quand la fréquence est basse et en se rechargeant quand la fréquence est haute.

En régime exceptionnel où la fréquence du réseau électrique synchrone s'écarte significativement de la valeur de référence, la ou les centrales hydroélectriques de l'agrégat peuvent ponctuellement augmenter ou baisser leur puissance afin de fournir de la réserve primaire de fréquence additionnelle en complément de la puissance fournie ou absorbée par la ou les batteries de l'agrégat.

De cette manière, la désoptimisation de la ou des centrales hydroélectriques de l'agrégat est limitée à ces événements exceptionnels, et il est possible de fournir au réseau une réserve de puissance supérieure à la puissance maximale de la ou des batteries de l'agrégat. Ainsi, le dimensionnement de la ou des batteries peut être optimisé, ce qui peut améliorer la rentabilité d'un projet.

Il est à présent fait référence à la figure 4, qui illustre une architecture générale d'un système de contrôle d'un agrégat de moyens de production raccordés au réseau électrique, dans un exemple de réalisation.

L'agrégat est une centrale électrique virtuelle formée, dans cet exemple simplifié, d'une batterie (30) et d'une pluralité de centrales hydroélectriques (50, 51, 52).

La batterie est pilotée par un contrôleur local (20) qui recueille ou mesure la fréquence f du réseau électrique. Le pilotage au niveau du contrôleur local (20) comprend une détermination d'une consigne de puissance globale incorporant une contribution totale ou partielle au service de réglage primaire de fréquence. Des détails supplémentaires sur le pilotage de la batterie sont fournis plus loin. De manière générale, l'agrégat peut évidemment comprendre une pluralité de batteries, pilotées soit chacune par un contrôleur local dédié, soit par un contrôleur commun assumant les mêmes fonctions que le contrôleur local (20) présenté dans cet exemple.

Les centrales hydroélectriques (50, 51, 52) sont chacune commandée par un contrôleur local (40, 41, 42) respectif qui en recueille ou mesure la puissance active.

L'agrégat dispose en outre d'un contrôleur centralisé (10) qui surveille et pilote l'ensemble de l'agrégat en communiquant avec les différents contrôleurs locaux (20, 40, 41, 42). Le contrôleur centralisé recueille, au moins, la fréquence du réseau électrique à chaque instant. Cette ou ces mesures de fréquence peuvent simplement être obtenues via un capteur de fréquence intégré ou transmises par le contrôleur local (20) de la batterie ou par toute autre entité. Le contrôleur centralisé (10) recueille également des mesures indicatives de l'évolution temporelle de la puissance totale issue des centrales hydroélectriques de l'agrégat. Ces mesures peuvent par exemple être, pour chaque centrale hydroélectrique, un relevé horodaté de la puissance qui en est issue. De tels relevés peuvent être effectués par exemple par les contrôleurs locaux (40, 41, 42) des centrales hydroélectriques.

Le contrôleur local (20) de la batterie commande la batterie (30) en émettant une consigne globale déterminée, en partie, sur la base d'une consigne partielle transmise par le contrôleur centralisé (10) au contrôleur local (20) de la batterie. Ainsi, le pilotage de la batterie est dite « hybride », car la détermination de la consigne de puissance globale implique à la fois le contrôleur local (20) de la batterie et le contrôleur centralisé (10).

En parallèle, le réglage primaire de fréquence fourni par les centrales hydroélectriques (50, 51, 52) est commandé de manière centralisée. C'est le contrôleur centralisé (10) qui décide à chaque instant, en fonction d'un certain nombre de critères, par exemple sur la base de l'écart entre la fréquence mesurée du réseau électrique et la fréquence nominale, d'activer une réserve primaire de fréquence à la hausse ou à la baisse sur une ou plusieurs centrales hydroélectriques. Cette réserve est dite complémentaire en ce qu'elle peut s'additionner à celle fournie par ailleurs par la batterie. L'activation de cette réserve se fait en envoyant des consignes de puissance aux contrôleurs locaux (40, 41 ,42) des centrales hydroélectriques pour leur demander de monter ou baisser d'une certaine quantité la puissance des centrales hydroélectriques (50, 51, 52) qu'ils pilotent.

Un avantage d'une telle implémentation est de permettre d'agréger différents types de moyens de production au sein d'une centrale virtuelle pour fournir un service de réglage de fréquence :
une ou plusieurs batteries capables de participer au réglage de fréquence de manière décentralisée et/ou centralisée avec une réponse précise et rapide, et
des centrales hydroélectriques non-équipées d'un régulateur de vitesse, et qui seraient à ce titre incapables de participer au réglage de fréquence de manière autonome ou décentralisée.

Une telle agrégation rend possible l'exploitation d'une flexibilité, existante mais inexploitée jusqu'alors, relative à la puissance issue d'un ensemble de centrales hydroélectriques pour participer à la stabilisation de la fréquence du réseau. L'agrégation des centrales hydroélectriques avec une ou plusieurs batteries permet de fournir un service de réglage primaire de fréquence ayant une réponse plus rapide et plus précise que ne le permettrait un éventuel pilotage centralisé d'un ensemble de centrales hydroélectriques non agrégées à une quelconque batterie.

La stratégie combinant une commande coordonnée de la ou des batteries et des centrales hydroélectriques permet d'optimiser le dimensionnement de la ou des batteries. En effet, une telle stratégie a pour avantage de permettre de soulager la sollicitation de la ou des batteries afin d'en réduire le cyclage et par extension le vieillissement. Une telle stratégie a pour avantage supplémentaire d'offrir, via la commande des centrales hydroélectriques, une réserve de fréquence complémentaire à celle de la ou des batteries en particulier en cas de déviations de fréquence importantes pour lesquelles la puissance de la ou des batteries seules serait insuffisante.

Un exemple d'algorithme de pilotage, convenant pour l'agrégat représenté sur la figure 4, est à présent détaillé.

Le réglage primaire de fréquence réalisé par la batterie (30) est géré par le contrôleur local (20) de la batterie, qui mesure la fréquence f du réseau et calcule une consigne de puissance P_{FCR} destinée à assurer ce réglage primaire de fréquence. La consigne de puissance P_{FCR} peut par exemple suivre la loi classique P_{FCR} = - K (f - f₀). Une telle loi assure une réponse en puissance précise et rapide proportionnelle à l'écart de fréquence.

Le terme K est une constante qui représente l'énergie réglante de l'agrégat. De manière connue, la détermination de la constante K découle d'une estimation ou d'une détermination d'une réserve primaire de fréquence associée à un moyen de production. En l'occurrence, il est pertinent d'estimer ou de déterminer la réserve primaire de fréquence de l'ensemble des moyens de production combinés formant l'agrégat. La constante K peut, par exemple, être déterminée par le contrôleur centralisé (10), ou par toute autre entité apte à effectuer cette détermination, puis communiquée au contrôleur local (20) de la batterie.

La consigne de puissance totale P_{ref_bat} de la batterie peut être définie, dans un exemple simple, par la loi P_{ref_bat} = P_{FCR} + P_{0_bat}, où P_{0_bat} est une consigne de puissance déterminée par le contrôleur centralisé (10) puis communiquée au contrôleur local (20) de la batterie.

De plus, le contrôleur centralisé surveille à tout instant la puissance globale issue des centrales hydroélectriques de l'agrégat, c'est-à-dire la somme des puissances issues de chacune des centrales hydroélectriques de l'agrégat.

Cette surveillance offre la possibilité au contrôleur centralisé de compenser les variations de cette puissance globale en temps réel par un ajustement de la consigne P_{0_bat} transmise au contrôleur local de la batterie. Cette compensation s'effectue de sorte à ce que la puissance totale, notée Pᵥₚₚ, des moyens de production de l'agrégat respecte l'équation Pᵥₚₚ = P_{0_vpp} - K (f-f₀). Le terme P_{0_vpp} désigne la puissance de consigne globale de l'agrégat. Il s'agit d'une valeur cible, prédéterminée, de puissance globale issue de l'ensemble des moyens de production de l'agrégat. Selon l'équation ci-dessus, Pᵥₚₚ = P_{0_vpp} lorsque la fréquence f du réseau électrique est égale à la fréquence nominale f₀.

Autrement dit, la consigne P_{0_bat} est ajustée en temps réel de manière à compenser des fluctuations de puissance issue de l'ensemble des centrales hydroélectriques de l'agrégat, notée P_{tot_hydro}. Par exemple, la consigne P_{0_bat} peut être calculée par l'équation P_{0_bat} = P_{0_hydro} - P_{tot_hydro}, où le terme P_{0_hydro} est une consigne de puissance globale souhaitée de l'ensemble des centrales hydroélectriques de l'agrégat.

Cette compensation en temps réel des variations de puissance issue d'une ou plusieurs centrales hydroélectriques par une ou plusieurs batteries est un contrôle en boucle fermée vis-à-vis de la puissance d'origine hydroélectrique. Elle est importante car de manière générale, les centrales hydroélectriques classiques ont une réponse en puissance lente et peu précise par rapport aux batteries. Cette correction en temps-réel par la batterie permet d'assurer une réponse précise de l'agrégat par rapport à la consigne de puissance globale souhaitée.

Les centrales hydroélectriques sont pilotées par une transmission de consignes d'ajustement de puissance, notées P_{flex_i}, du contrôleur centralisé (10) aux contrôleurs locaux (40, 41, 42) des centrales hydroélectriques de l'agrégat. Chaque consigne P_{flex_i} est relative. Elle s'additionne à une consigne calculée indépendamment par le contrôleur local de chaque centrale hydroélectrique, elle-même calculée en fonction du débit hydraulique entrant et/ou du niveau du réservoir de la centrale, ou définie manuellement par l'exploitant de la centrale ou par un autre automate de pilotage.

Pour chaque centrale hydroélectrique, la consigne P_{flex_i} calculée par le contrôleur centralisé (10) est nulle, soit égale à 0 MW, lorsqu'aucune activation à la hausse ou à la baisse de la réserve primaire de fréquence propre à chaque centrale hydroélectrique n'est souhaitée.

La réception d'une consigne P_{flex_i} positive par un contrôleur local d'une centrale hydroélectrique donnée entraîne une activation de la réserve à la hausse, c'est-à-dire une commande d'augmentation de la puissance active de la centrale hydroélectrique en question.

A l'inverse, la réception d'une consigne P_{flex_i} négative par un contrôleur local d'une centrale hydroélectrique donnée entraîne une activation de la réserve à la baisse, c'est-à-dire une commande de diminution de la puissance active de la centrale hydroélectrique en question.

Un exemple de fonctionnement détaillé d'un algorithme de commande convenant pour piloter l'agrégat est à présent décrit en lien avec la figure 4.

A chaque pas de temps, les actions suivantes sont exécutées par le contrôleur centralisé (10). Le contrôleur centralisé (10) obtient (101, 103, 105) une mesure de puissance P_{mes_i} de chaque centrale hydroélectrique. Ces mesures de puissance P_{mes_i} sont respectivement effectuées (100, 102, 104) par des capteurs, puis transmises, par les capteurs, aux contrôleurs locaux (40, 41, 42) des centrales hydroélectriques, et ensuite transmises, par les contrôleurs locaux (40, 41, 42), au contrôleur centralisé (10). Le contrôleur centralisé (10) calcule la somme de ces mesures de puissance pour obtenir la puissance totale P_{tot_hydro} produite par les centrales hydroélectriques (50, 51, 52) de l'agrégat. L'algorithme embarqué dans le contrôleur centralisé (10) compare la valeur P_{tot_hydro} à une puissance de consigne globale P_{0-hydro} des centrales hydroélectriques de l'agrégat et calcule sa contribution P_{0_bat} à la consigne de puissance globale de la batterie sur la base de cette comparaison, par exemple par l'équation P_{0_bat} = P_{0_hydro} - P_{tot_hydro}. L'algorithme embarqué dans le contrôleur centralisé (10) obtient (107) en outre une mesure de la fréquence du réseau, et calcule, pour chaque centrale hydroélectrique de l'agrégat, en fonction de cette mesure de fréquence et d'un ensemble de critères prédéfinis, une consigne de puissance P_{flex_i} respective. Le contrôleur centralisé (10) peut alors transmettre (106), via un premier lien de communication, la consigne P_{0_bat} et le gain de réglage K au contrôleur local (20) de la batterie (30). Le contrôleur centralisé (10) peut aussi transmettre (108, 109, 110), via d'autres liens de communication, les consignes P_{flex_i} aux contrôleurs locaux (40, 41, 42) des centrales hydroélectriques correspondantes.

En parallèle des actions du contrôleur centralisé (10), les actions suivantes sont exécutées à chaque pas de temps par le contrôleur local (20) de la batterie (30). Le contrôleur local (20) est susceptible d'obtenir la consigne P_{0_bat} et le gain de réglage K via le lien de communication avec le contrôleur centralisé (10). Le contrôleur local (20) calcule alors, à partir d'une mesure reçue (114) de la fréquence du réseau et du gain K transmis par le contrôleur centralisé (10), la consigne globale de la batterie comme étant P_{ref_bat} = -K (f - f₀) + P_{0_bat}. Le contrôleur local (20) transmet (116) la consigne globale P_{ref_bat} à la batterie (30), qui produit alors une puissance égale à cette consigne si ses limitations en puissance et état de charge le permettent. Optionnellement, le contrôleur local (20) peut mesurer (115) la puissance effectivement produite par la batterie et/ou son état de charge à des fins de contrôle.

En parallèle des actions du contrôleur centralisé (10) et du contrôleur local (20) de la batterie (30), les actions suivantes sont exécutées à chaque pas de temps par les contrôleurs locaux (40, 41 ,42) de chaque centrale hydroélectrique (50, 51, 52). Chaque contrôleur local (40, 41, 42) obtient (100, 102, 104) une mesure de puissance de la centrale hydroélectrique qu'il commande et la transmet au contrôleur centralisé (10) via le lien de communication avec ce dernier. Chaque contrôleur local (40, 41, 42) est susceptible d'obtenir en retour une consigne P_{flex_i} via le lien de communication avec le contrôleur centralisé (10). Chaque contrôleur local (40, 41, 42) ayant reçu une telle consigne P_{flex_i} l'additionne (111, 112, 113) à sa consigne de puissance interne. Ainsi, la puissance de la centrale hydroélectrique concernée (50, 51, 52) augmente ou diminue en fonction de la consigne P_{flex_i} appliquée.

Un exemple de méthode de calcul de la consigne globale P_{0_hydro} de l'ensemble des centrales hydroélectriques de l'agrégat hors contribution au réglage primaire de fréquence est à présent décrite en référence à un exemple de scénario illustré sur la figure 5. La consigne globale P_{0-hydro} représente la puissance globale issue des centrales hydroélectriques de l'agrégat en régime stabilisé lorsque toutes les consignes P_{flex_i} sont égales à 0 MW. Une méthode de calcul de cette grandeur P_{0_hydro} consiste à respectivement estimer une puissance de base P_{0-hydro} (i) pour chaque centrale hydroélectrique de l'agrégat, puis de calculer la somme de ces puissances de base.

La figure 5 montre trois courbes, qui représentent chacune la valeur d'une grandeur en fonction du temps.

Plus spécifiquement, une première courbe (4) montre l'évolution temporelle des valeurs de la consigne P_{flex_i} successivement transmises, à chaque pas de temps, par le contrôleur centralisé (10) à un contrôleur local (40) de l'une des centrales hydroélectriques de l'agrégat. Dans cet exemple, les valeurs transmises de la consigne P_{flex_i} sont nulles entre les instants T0 et T1, puis non nulles, et plus spécifiquement positives entre les instants T1 et T2, et enfin de nouveau nulles à partir de l'instant T2.

Une deuxième courbe (5) montre l'évolution temporelle de la puissance P_{mes_i}, mesurée à chaque pas de temps, réellement produite par cette centrale hydroélectrique. Un plateau de puissance P_{mes_i} est observé, avec un décalage correspondant au temps de réponse de la centrale hydroélectrique, suite à l'émission de consignes P_{flex_i} positives entre les instants T1 et T2.

Une troisième courbe (6) montre l'évolution temporelle de la puissance de base P_{0_hydro} (i) de cette centrale hydroélectrique, déterminée selon l'exemple de méthode de calcul proposée. La puissance de base P_{0_hydro} (i) de chaque centrale hydroélectrique de l'agrégat peut être calculée sur la base d'une condition, ou règle, prédéterminée.

A titre d'exemple, la condition suivante est définie : si et seulement si la consigne P_{flex_i} reçue par le contrôleur local d'une centrale hydroélectrique donnée est et reste nulle (P_{flex_i} = 0 MW) de manière continue depuis un laps de temps prédéterminé (par exemple une minute), alors la puissance de base P_{0_hydro} (i) retenue pour cette centrale hydroélectrique est considérée égale à la dernière mesure de puissance recensée issue de cette centrale hydroélectrique. Sur la figure 5, cette condition est considérée respectée dans un premier intervalle de temps s'achevant à l'instant T1 et dans un deuxième intervalle de temps débutant à l'instant T3. Dans ces deux intervalles, P_{0_hydro} (i) est égal à P_{mes_i}.

Dans le cas contraire, la puissance de base P_{0_hydro} (i) est figée, maintenue constante et égale à la dernière valeur précédemment retenue de P_{0_hydro} (i). Sur la figure 5, ce cas de figure est rencontré dans l'intervalle de temps débutant à l'instant T1 et s'achevant à l'instant T3. En effet, à partir de l'instant T1, la condition précitée n'est plus respectée car la valeur de P_{flex_i} devient non nulle, et ce jusqu' à l'instant T2. Ce n'est qu'à partir de l'instant T3, correspondant à l'expiration d'un laps de temps prédéterminé débutant à l'instant T2, que la condition précitée est de nouveau respectée.

La règle prédéterminée ainsi décrite fait abstraction de toute évolution temporelle du débit hydraulique entrant ou du niveau du réservoir de la centrale tant que la condition précitée n'est pas respectée. De telles évolutions temporelles peuvent être modélisées pour affiner la détermination, à chaque pas de temps, de la puissance de base P_{0_hydro}.

Un exemple de critère d'activation de la réserve des centrales hydroélectriques est à présent décrit en considérant une fréquence nominale de 50 Hz. Dans cet exemple, une loi statique (7) exprimant une consigne globale P_{flex_tot} en fonction de la fréquence peut ainsi être définie, telle qu'illustrée sur la figure 6.

Les consignes P_{flex_i} des centrales hydroélectriques sont toutes fixées à une valeur nulle lorsque la fréquence mesurée du réseau est stable et proche de 50 Hz, car dans cette situation, la batterie seule peut assurer la totalité du réglage de fréquence. Si la fréquence mesurée du réseau passe en dessous d'un seuil bas, par exemple 49,9 Hz, l'activation à la hausse de la réserve primaire de fréquence d'origine hydroélectrique est sollicitée par une consigne globale P_{flex_tot} positive et proportionnelle à l'écart de fréquence au-delà de 49,9 Hz. Si la fréquence du réseau passe au-dessus d'un seuil haut, par exemple 50,1 Hz, l'activation à la hausse de la réserve primaire de fréquence d'origine hydroélectrique est sollicitée par une consigne globale P_{flex_tot} négative et proportionnelle à l'écart de fréquence au-delà de 50,1 Hz. La valeur absolue de la consigne globale P_{flex_tot} est par ailleurs saturée compte tenu de l'amplitude, nécessairement finie, de la réserve primaire de fréquence d'origine hydroélectrique. Ensuite, la consigne P_{flex_tot} est décomposée en consignes P_{flex_i} qui sont chacune transmises à un contrôleur local respectif d'une centrale hydroélectrique respective. Cette décomposition peut être réalisée de plusieurs manières, par exemple au prorata des puissances de chaque centrale hydroélectrique, ou en suivant un ordre de priorité prédéfini. Un exemple d'ordre de priorité peut être de placer d'abord la réserve maximale possible sur la centrale hydroélectrique ayant le premier rang dans l'ordre de priorité. Puis, si la réserve placée est inférieure à la consigne globale P_{flex_tot}, on place également la réserve maximale possible sur la centrale hydroélectrique ayant le deuxième rang dans l'ordre de priorité, et ainsi de suite, jusqu'à assurer que la somme des consignes P_{flex_i} correspondant aux réserves placées soit supérieure ou égale à la demande globale P_{flex_tot}.

Une variante du procédé de commande décrit précédemment est à présent proposée. Dans cette variante, la consigne P_{0_bat} envoyée par le contrôleur centralisé (10) au contrôleur local (20) de la batterie n'est pas simplement le résultat de l'équation P_{0_bat} = P_{0_hydro} - P_{tot_hydro}. Au contraire, la consigne P_{0_bat} contient, dans cette variante, une composante de puissance P_{soc} qui permet de gérer l'état de charge de la batterie et ainsi éviter qu'elle ne se charge ou décharge au-delà de certains seuils. Plusieurs stratégies de gestion de l'état de charge de la batterie sont bien connues aujourd'hui dans la littérature. Un exemple de stratégie classique est l'utilisation d'une loi statique de gestion de charge P_{soc} = f(SOC), où SOC désigne l'état de charge courant de la batterie, mesurable au niveau du contrôleur local (20) de la batterie et pouvant être transmis au contrôleur centralisé (10). Un exemple d'une telle loi statique (8) est illustré sur la figure 7.

L'objectif de la loi de gestion de charge est d'augmenter la puissance de la batterie quand l'état de charge est élevé pour favoriser la décharge et de diminuer la puissance de la batterie quand l'état de charge est faible pour favoriser la charge.

Ainsi, dans la variante proposée, le terme P_{soc} peut être calculé par le contrôleur centralisé (10) et intégré à la consigne P_{0_bat} envoyée au contrôleur local (20) de la batterie. Dans ce cas, la mesure de l'état de charge de la batterie doit être transmise par le contrôleur local (20) de la batterie au contrôleur centralisé (10) via le lien de communication entre les deux. Le calcul du terme P_{0_bat} devient alors P_{0_bat} = P_{0_hydro} - P_{tot_hydro} + P_{soc}.

Alternativement, le terme P_{soc} peut être calculé par le contrôleur local (20) de la batterie, et dans ce cas, le terme P_{soc} ne change pas par rapport au fonctionnement de base, mais c'est le calcul de la consigne finale de la batterie effectué par le contrôleur local (20) de la batterie qui change pour calculer et intégrer la composante P_{soc}. Le calcul réalisé par le contrôleur local de la batterie devient alors P_{ref_bat} = - K (f - f₀) + P_{0_bat} + P_{soc}.

## Revendications

1. Procédé de commande, mis en œuvre par un contrôleur centralisé, d'une centrale électrique virtuelle raccordée au réseau électrique, la centrale électrique virtuelle comprenant au moins une batterie et un ensemble de centrales hydroélectriques, la batterie étant commandée par un contrôleur local configuré pour effectuer un réglage primaire de fréquence du réseau électrique, chaque centrale hydroélectrique étant commandée par un contrôleur local correspondant,
le procédé comprenant :
obtenir, par au moins une mesure, une puissance totale, notée P_{tot_hydro}, produite par l'ensemble de centrales hydroélectriques à un instant donné,
obtenir une mesure d'une fréquence, notée f, du réseau électrique à l'instant donné,
fournir, au contrôleur local de la batterie, une consigne d'ajustement de puissance de la batterie, notée P_{0_bat}, calculée sur la base de ladite puissance totale, ladite consigne d'ajustement de puissance de la batterie étant destinée à modifier la commande de la batterie par le contrôleur local de manière à compenser une variation de ladite puissance totale par rapport à une puissance de consigne globale de l'ensemble de centrales hydroélectriques, et
fournir, à au moins un contrôleur local d'une centrale hydroélectrique, au moins une consigne d'ajustement de puissance de ladite centrale hydroélectrique, notée P_{flex_i}, calculée sur la base de ladite mesure de fréquence, la consigne d'ajustement de puissance de ladite centrale hydroélectrique étant destinée à provoquer une variation d'une puissance produite par ladite centrale hydroélectrique, conformément à un critère d'activation destiné à répartir une charge du réglage de fréquence entre la batterie et les centrales hydroélectriques en fonction de ladite mesure de fréquence.

2. Procédé selon la revendication 1, comprenant en outre :
obtenir une valeur d'énergie réglante de la centrale électrique virtuelle, notée K, calculée sur la base d'une estimation d'une quantité de réserve primaire de fréquence disponible de la centrale électrique virtuelle.

3. Procédé selon la revendication 1 ou 2, dans lequel la consigne d'ajustement de puissance fournie au contrôleur local d'une centrale hydroélectrique est calculée au moyen d'une formule de calcul sélectionnée en fonction d'au moins un critère prédéfini relatif à la mesure de fréquence.

4. Procédé selon la revendication 3, dans lequel au moins un critère prédéfini est un résultat d'une comparaison entre, d'une part, un écart entre la mesure de fréquence et une valeur nominale de fréquence, et d'autre part un seuil prédéfini.

5. Procédé selon l'une des revendications 1 à 4, comprenant en outre :
obtenir, du contrôleur local de chaque centrale hydroélectrique, une mesure de puissance individualisée produite par ladite centrale hydroélectrique à l'instant donné, et
calculer la puissance totale produite par l'ensemble de centrales hydroélectriques à l'instant donné comme étant la somme desdites mesures de puissance individualisées à l'instant donné.

6. Procédé selon l'une des revendications 1 à 5, dans lequel :
la consigne d'ajustement de puissance fournie au contrôleur local d'une centrale hydroélectrique est calculée par rapport à une puissance de base de ladite centrale hydroélectrique,
ladite puissance de base étant calculée sur la base d'un critère fonction d'un historique de mesures horodatées de puissance individualisée produite par ladite centrale hydroélectrique et d'un historique de consignes d'ajustement de puissance précédemment fournies au contrôleur local de ladite centrale hydroélectrique.

7. Procédé selon l'une des revendications 1 à 6, dans lequel, chaque centrale hydroélectrique de la centrale électrique virtuelle disposant d'une réserve primaire de fréquence propre :
la consigne d'ajustement de puissance fournie au contrôleur local d'une centrale hydroélectrique donnée est calculée en fonction d'un ordre de priorité prédéfini relatif à un recours à chacune desdites réserves primaires de fréquence.

8. Procédé selon l'une des revendications 1 à 7, comprenant en outre :
obtenir une mesure d'un état de charge de la batterie, et
dans lequel la consigne de puissance de la batterie est en outre calculée sur la base de ladite mesure de l'état de charge de manière à favoriser un maintien, ou un retour, de l'état de la charge de la batterie au sein d'un domaine prédéfini.

9. Système comprenant une centrale électrique virtuelle raccordée au réseau électrique et un contrôleur centralisé configuré pour commander la centrale électrique virtuelle, la centrale électrique virtuelle comprenant au moins une batterie et un ensemble de centrales hydroélectriques, la batterie étant commandée par un contrôleur local configuré pour effectuer un réglage primaire de fréquence du réseau électrique, chaque centrale hydroélectrique étant commandée par un contrôleur local correspondant,
commander la centrale électrique virtuelle comprenant :
obtenir, par au moins une mesure, une puissance totale, notée P_{tot_hydro}, produite par l'ensemble de centrales hydroélectriques à un instant donné,
obtenir une mesure d'une fréquence, notée f, du réseau électrique à l'instant donné,
fournir, au contrôleur local de la batterie, une consigne de puissance de la batterie, notée P_{0_bat}, calculée sur la base de ladite puissance totale, ladite consigne de puissance étant destinée à modifier la commande de la batterie par le contrôleur local de manière à compenser une variation de ladite puissance totale par rapport à une puissance de consigne globale de l'ensemble de centrales hydroélectriques, et
fournir, à au moins un contrôleur local d'une centrale hydroélectrique, au moins une consigne d'ajustement de puissance, notée P_{flex_i}, calculée sur la base de ladite mesure de fréquence, ladite consigne d'ajustement de puissance étant destinée à provoquer une variation d'une puissance produite par ladite centrale hydroélectrique conformément à un critère d'activation destiné à répartir une charge du réglage de fréquence entre la batterie et les centrales hydroélectriques en fonction de ladite mesure de fréquence.

10. Programme informatique comportant des instructions pour la mise en œuvre du procédé selon l'une des revendications 1 à 8 lorsque ce programme est exécuté par le contrôleur centralisé du système selon la revendication 9.

## Patentansprüche

1. Steuerverfahren, das von einer zentralisierten Steuerung eines virtuellen Kraftwerks ausgeführt wird, das an das elektrische Netz angeschlossen ist, wobei das virtuelle Kraftwerk mindestens eine Batterie und einen Satz von Wasserkraftwerken umfasst, wobei die Batterie von einer lokalen Steuerung gesteuert wird, die konfiguriert ist, um eine primäre Frequenzregelung des elektrischen Netzes durchzuführen, wobei jedes Wasserkraftwerk von einer entsprechenden lokalen Steuerung gesteuert wird, wobei das Verfahren Folgendes umfasst:
Erhalten, durch mindestens eine Messung, einer Gesamtleistung, bezeichnet als P_{tot_hydro}, die von dem Satz von Wasserkraftwerken zu einem gegebenen Zeitpunkt erzeugt wird,
Erhalten einer Messung einer Frequenz, bezeichnet als f, des elektrischen Netzes zu dem gegebenen Zeitpunkt,
Liefern, an die lokale Steuerung der Batterie, eines Leistungseinstellungs-Sollwerts für die Batterie, bezeichnet als P_{o_bat}, der auf der Grundlage der besagten Gesamtleistung berechnet wird, wobei der besagte Leistungseinstellungs-Sollwert für die Batterie dazu bestimmt ist, die Steuerung der Batterie durch die lokale Steuerung zu modifizieren, um eine Variation der besagten Gesamtleistung im Verhältnis zu einem globalen Leistungssollwert des Satzes von Wasserkraftwerken zu kompensieren, und
Liefern, an mindestens eine lokale Steuerung eines Wasserkraftwerks, mindestens eines Leistungseinstellungs-Sollwerts für das besagte Wasserkraftwerk, bezeichnet als P_{flex_i}, der auf der Grundlage der besagten Frequenzmessung berechnet wird, wobei der Leistungseinstellungs-Sollwert für das besagte Wasserkraftwerk dazu bestimmt ist, eine Variation einer von dem besagten Wasserkraftwerk erzeugten Leistung zu bewirken, gemäß einem Aktivierungskriterium, das dazu bestimmt ist, eine Frequenzregelungs-Last zwischen der Batterie und den Wasserkraftwerken in Abhängigkeit von der besagten Frequenzmessung zu verteilen.

2. Verfahren nach Anspruch 1, ferner umfassend:
Erhalten eines Regelenergiewertes des virtuellen Kraftwerks, bezeichnet als K, der auf der Grundlage einer Schätzung einer Menge an verfügbarer Primärfrequenzreserve des virtuellen Kraftwerks berechnet wird.

3. Verfahren nach Anspruch 1 oder 2, wobei der an die lokale Steuerung eines Wasserkraftwerks gelieferte Leistungseinstellungs-Sollwert mittels einer Berechnungsformel berechnet wird, die in Abhängigkeit von mindestens einem vordefinierten Kriterium in Bezug auf die Frequenzmessung ausgewählt wird.

4. Verfahren nach Anspruch 3, wobei das mindestens eine vordefinierte Kriterium ein Ergebnis eines Vergleichs zwischen einerseits einer Abweichung zwischen der Frequenzmessung und einem Nennfrequenzwert und andererseits einem vordefinierten Schwellenwert ist.

5. Verfahren nach einem der Ansprüche 1 bis 4, ferner umfassend:
Erhalten, von der lokalen Steuerung jedes Wasserkraftwerks, einer Messung der individualisierten Leistung, die von dem besagten Wasserkraftwerk zu dem gegebenen Zeitpunkt erzeugt wird, und
Berechnen der Gesamtleistung, die von dem Satz von Wasserkraftwerken zu dem gegebenen Zeitpunkt erzeugt wird, als die Summe der besagten Messungen der individualisierten Leistung zu dem gegebenen Zeitpunkt.

6. Verfahren nach einem der Ansprüche 1 bis 5, wobei:
der an die lokale Steuerung eines Wasserkraftwerks gelieferte Leistungseinstellungs-Sollwert in Bezug auf eine Grundleistung des besagten Wasserkraftwerks berechnet wird,
wobei die besagte Grundleistung auf der Grundlage eines Kriteriums berechnet wird, das eine Funktion einer Historie zeitgestempelter Messungen der von dem besagten Wasserkraftwerk erzeugten individualisierten Leistung und einer Historie von Leistungseinstellungs-Sollwerten ist, die zuvor an die lokale Steuerung des besagten Wasserkraftwerks geliefert wurden.

7. Verfahren nach einem der Ansprüche 1 bis 6, wobei jedes Wasserkraftwerk des virtuellen Kraftwerks über eine eigene Primärfrequenzreserve verfügt:
der an die lokale Steuerung eines gegebenen Wasserkraftwerks gelieferte Leistungseinstellungs-Sollwert in Abhängigkeit von einer vordefinierten Prioritätsreihenfolge in Bezug auf eine Inanspruchnahme jeder der besagten Primärfrequenzreserven berechnet wird.

8. Verfahren nach einem der Ansprüche 1 bis 7, ferner umfassend:
Erhalten einer Messung eines Ladezustands der Batterie, und
wobei der Leistungssollwert der Batterie ferner auf der Grundlage der besagten Messung des Ladezustands berechnet wird, um eine Aufrechterhaltung oder eine Rückkehr des Ladezustands der Batterie innerhalb eines vordefinierten Bereichs zu begünstigen.

9. System, umfassend ein virtuelles Kraftwerk, das an das elektrische Netz angeschlossen ist, und eine zentralisierte Steuerung, die konfiguriert ist, um das virtuelle Kraftwerk zu steuern, wobei das virtuelle Kraftwerk mindestens eine Batterie und einen Satz von Wasserkraftwerken umfasst, wobei die Batterie von einer lokalen Steuerung gesteuert wird, die konfiguriert ist, um eine primäre Frequenzregelung des elektrischen Netzes durchzuführen, wobei jedes Wasserkraftwerk von einer entsprechenden lokalen Steuerung gesteuert wird, wobei die Steuerung des virtuellen Kraftwerks Folgendes umfasst:
Erhalten, durch mindestens eine Messung, einer Gesamtleistung, bezeichnet als P_{tot_hydro}, die von dem Satz von Wasserkraftwerken zu einem gegebenen Zeitpunkt erzeugt wird,
Erhalten einer Messung einer Frequenz, bezeichnet als f, des elektrischen Netzes zu dem gegebenen Zeitpunkt,
Liefern, an die lokale Steuerung der Batterie, eines Leistungssollwerts für die Batterie, bezeichnet als P_{o_bat}, der auf der Grundlage der besagten Gesamtleistung berechnet wird, wobei der besagte Leistungssollwert dazu bestimmt ist, die Steuerung der Batterie durch die lokale Steuerung zu modifizieren, um eine Variation der besagten Gesamtleistung im Verhältnis zu einem globalen Leistungssollwert des Satzes von Wasserkraftwerken zu kompensieren, und
Liefern, an mindestens eine lokale Steuerung eines Wasserkraftwerks, mindestens eines Leistungseinstellungs-Sollwerts, bezeichnet als P_{flex_i}, der auf der Grundlage der besagten Frequenzmessung berechnet wird, wobei der besagte Leistungseinstellungs-Sollwert dazu bestimmt ist, eine Variation einer von dem besagten Wasserkraftwerk erzeugten Leistung gemäß einem Aktivierungskriterium zu bewirken, das dazu bestimmt ist, eine Frequenzregelungs-Last zwischen der Batterie und den Wasserkraftwerken in Abhängigkeit von der besagten Frequenzmessung zu verteilen.

10. Computerprogramm, das Anweisungen zur Durchführung des Verfahrens nach einem der Ansprüche 1 bis 8 umfasst, wenn dieses Programm von der zentralisierten Steuerung des Systems nach Anspruch 9 ausgeführt wird.

## Claims

1. A control method, implemented by a centralized controller, of a virtual power plant connected to the electrical grid, the virtual power plant comprising at least one battery and a set of hydroelectric power plants, the battery being controlled by a local controller configured to perform primary frequency regulation of the electrical grid, each hydroelectric power plant being controlled by a corresponding local controller, the method comprising:
obtaining, by at least one measurement, a total power, denoted P_{tot_hydro}, produced by the set of hydroelectric power plants at a given instant,
obtaining a measurement of a frequency, denoted f, of the electrical grid at the given instant,
providing, to the local controller of the battery, a power adjustment setpoint for the battery, denoted P_{o_bat}, calculated based on said total power, said power adjustment setpoint for the battery being intended to modify the control of the battery by the local controller so as to compensate for a variation of said total power relative to a global power setpoint of the set of hydroelectric power plants, and
providing, to at least one local controller of a hydroelectric power plant, at least one power adjustment setpoint for said hydroelectric power plant, denoted P_{flex_i}, calculated based on said frequency measurement, the power adjustment setpoint for said hydroelectric power plant being intended to cause a variation of a power produced by said hydroelectric power plant, in accordance with an activation criterion intended to distribute a frequency regulation load between the battery and the hydroelectric power plants as a function of said frequency measurement.

2. The method according to claim 1, further comprising:
obtaining a regulating energy value of the virtual power plant, denoted K, calculated based on an estimation of a quantity of available primary frequency reserve of the virtual power plant.

3. The method according to claim 1 or 2, wherein the power adjustment setpoint provided to the local controller of a hydroelectric power plant is calculated by means of a calculation formula selected as a function of at least one predefined criterion relating to the frequency measurement.

4. The method according to claim 3, wherein the at least one predefined criterion is a result of a comparison between, on the one hand, a deviation between the frequency measurement and a nominal frequency value, and on the other hand a predefined threshold.

5. The method according to any one of claims 1 to 4, further comprising:
obtaining, from the local controller of each hydroelectric power plant, a measurement of individualized power produced by said hydroelectric power plant at the given instant, and
calculating the total power produced by the set of hydroelectric power plants at the given instant as being the sum of said measurements of individualized power at the given instant.

6. The method according to any one of claims 1 to 5, wherein:
the power adjustment setpoint provided to the local controller of a hydroelectric power plant is calculated relative to a base power of said hydroelectric power plant,
said base power being calculated based on a criterion which is a function of a history of time-stamped measurements of individualized power produced by said hydroelectric power plant and of a history of power adjustment setpoints previously provided to the local controller of said hydroelectric power plant.

7. The method according to any one of claims 1 to 6, wherein, each hydroelectric power plant of the virtual power plant having its own primary frequency reserve:
the power adjustment setpoint provided to the local controller of a given hydroelectric power plant is calculated as a function of a predefined priority order relating to a recourse to each of said primary frequency reserves.

8. The method according to any one of claims 1 to 7, further comprising:
obtaining a measurement of a state of charge of the battery, and
wherein the power setpoint of the battery is also calculated based on said measurement of the state of charge so as to favor a maintenance, or a return, of the state of charge of the battery within a predefined range.

9. A system comprising a virtual power plant connected to the electrical grid and a centralized controller configured to control the virtual power plant, the virtual power plant comprising at least one battery and a set of hydroelectric power plants, the battery being controlled by a local controller configured to perform primary frequency regulation of the electrical grid, each hydroelectric power plant being controlled by a corresponding local controller, the control of the virtual power plant comprising:
obtaining, by at least one measurement, a total power, denoted P_{tot_hydro}, produced by the set of hydroelectric power plants at a given instant,
obtaining a measurement of a frequency, denoted f, of the electrical grid at the given instant,
providing, to the local controller of the battery, a power setpoint for the battery, denoted P_{o_bat}, calculated based on said total power, said power setpoint being intended to modify the control of the battery by the local controller so as to compensate for a variation of said total power relative to a global power setpoint of the set of hydroelectric power plants, and
providing, to at least one local controller of a hydroelectric power plant, at least one power adjustment setpoint, denoted P_{flex_i}, calculated based on said frequency measurement, said power adjustment setpoint being intended to cause a variation of a power produced by said hydroelectric power plant in accordance with an activation criterion intended to distribute a frequency regulation load between the battery and the hydroelectric power plants as a function of said frequency measurement.

10. A computer program comprising instructions for implementing the method according to any one of claims 1 to 8 when this program is executed by the centralized controller of the system according to claim 9.
